# EUROPEAN PATENT APPLICATION

(11) **EP 0 836 237 A1**
(43) Date of publication of application: **15.04.1998**
(21) Application number: 97117258.0
(22) Date of filing: 06.10.1997
(51) Int. Cl.: H01M 2/30, H01M 2/06

(54) **Anticorrosion terminal with short anchoring, without die part lines, for accumulator batteries**

(30) Priority: 09.10.1996 AR 33844796
(71) Applicant: Casais, Osvaldo Balbino, 1431 Buenos Aires (AR)
(72) Inventor: Casais, Osvaldo Balbino, 1431 Buenos Aires (AR)
(74) Representative: Modiano, Guido, Dr.-Ing.

(57) **Abstract**

An anticorrosion terminal with short anchoring and without die part lines for accumulator batteries, constituted by an upper portion which is preferably shaped like a frustum-shaped hollow body (1) which protrudes from the cover of the battery, comprising, adjacent to the larger-section end of the hollow frustum-shaped body (1), a hollow lower portion (2) whose internal cavity is coaxial to the cavity of the frustum-shaped body; the hollow lower portion has a first cylindrical arm (4) having a larger diameter than the larger-section end of the hollow frustum-shaped body (1), which continues with a second frustum-shaped arm (4); terminal anchoring means (6) being formed next to the larger-section end of the arm and being constituted by a circumferential protrusion whose wall forms a plurality of anchoring recesses.

## Description

The present invention mainly relates to an anticorrosion terminal with short anchoring, without die part lines, for accumulator batteries which provides important advantages arising from its minimal corrosion due to migration of the internal electrolyte, from its weight, which is substantially lower than that of terminals produced up to now, and from the reduced maintenance required during operation of the batteries in which said terminal is used.

More specifically, the present invention refers to a terminal of the specified type for use in accumulator batteries, which has been conceived and developed as a consequence of the experience gained in using these devices to generate electric power and of the laboratory tests meant to study the highly damaging process of lead alloy terminal corrosion, caused by migration of the electrolyte toward the outer surface of the metal during operation of the battery. In this regard, the terminal according to the present invention minimizes this migration and accordingly its outer surface remains clean, maintaining good electrical contact with the terminal of the external circuit to which it is coupled. Likewise, the substantial reduction of the above-mentioned corrosion allows the battery to operate practically without any need for the conventional maintenance operations required to clean the terminal. Moreover, since it includes less material than the terminals used up to now, it is lighter, with the additional advantage of a lower production cost as regards the material and the simplicity of the equipment used to manufacture it.

An accumulator battery conventionally comprises a container, generally made of thermoplastic material, which contains the electrolyte and the lead plates with positive and negative polarities. Said container has, at its upper part, a cover or covering element, also made of thermoplastic material, through which the upper part of two lead terminals protrudes in most battery structures. The upper portion can assume various configurations, but it is generally constituted by a frustum-shaped hollow body whose dimensions are set by DIN, SAE, SETIA and other standards. Near its lower end, which is larger in diameter, said hollow frustum-shaped body continues with a likewise hollow lower portion which is embedded in the thermoplastic material and constitutes the portion of the terminal that is meant to anchor the terminal in the cover or covering element. Moreover, the internal cavity of the upper frustum-shaped body and the lower portion of said terminals form the seat for corresponding stems which are rigidly coupled respectively to the internal positive- and negative-polarity plates.

Each internal stem is connected to the respective lead terminal, next to its upper end, through a soldering process using lead or lead alloy, thus achieving the necessary electrical continuity.

The technology for manufacturing battery covers conventionally consists in using injection-molding machines, whereby the thermoplastic material is injected into the cover forming mold. In a first operation, the terminals are placed manually or automatically in respective openings of said mold; as a consequence of the high-pressure injection of the molten plastics, the terminals are made to adhere to the cover by means of their lower portion, which is partially embedded in the thermoplastic material.

Battery manufacturers and vehicle end-manufacturers set the minimum axial force and torque that each terminal must withstand without breakage of the metal and/or of the thermoplastic material of the cover. In order to meet this mechanical coupling requirement, various structures of the lower portion of the terminal have been developed, and all those structures ensure the anchoring of the lower portion in the material of the cover.

Those structures are generally constituted by a plurality of circumferential parallel protrusions which prevent axial movement, whilst the means for locking the rotary motion can assume various configurations, such as for example a plurality of cavities which contain the injected thermoplastic material and are formed in the perimeter of the side wall, or also a plurality of protrusions or teeth which protrude radially, etcetera. Examples of configuration of the means for anchoring the lower portion of the terminal can be seen in the figures of US-5,296,317 and EP-261,311.

As shown in the above patents, the configuration of the lower portion of the terminal is such that in the process for manufacturing this metal part it is necessary to use dies -- in the case of cold-forging and of pressure die-casting or molds -- in the case of casting -- which must be opened horizontally, i.e., at right angles to the axis of symmetry of the terminal, once the part is complete, because of the geometry of the part, in order to remove it from its seat in the fixture. These dies or molds must therefore be constituted by two or more moving parts which, once moved radially, form in the lateral surface of the lower portion of the formed terminal flash or die part lines in the material parallel to its axis of symmetry, at the facing and mutually contacting faces of the adjacent parts of the mold or die. The thickness of the flash or die part lines increases as the mold or die ages, as a consequence of the continuous opening and closure of its components.

By means of protrusions formed using penetrating dies, it has been ascertained that the flash or die part lines constitute paths through which the electrolyte flows outwards, facilitating corrosion of the terminal and consequently affecting its electrical contact with the terminal to which it is connected. This migration of the electrolyte through the flash or die part lines is compounded by migration due to a capillary effect generated by the internal porosity of the lead alloy when the terminal is manufactured using casting or pressure die-casting.

All the terminals used up to now in covers or covering elements made of thermoplastic material for batteries meet the above-mentioned requirement of anchoring or mechanical fixing by means of a lower portion which is embedded in the cover, whose shape requires the use of molds or dies which must be opened by moving their components at right angles to the axis of symmetry of the terminal in order to extract it once it has been completed. These terminals, in addition to the drawback of having longitudinal flash or die part lines which very significantly affect the corrosion of their outer surface, entail the additional drawback that their lower portion -- whose length can be as much as 1/3 of the total length of the terminal -- contains an amount of lead alloy which, besides not having any function from the electrical point of view, causes an undesirable increase in the total weight of the terminal.

The above drawbacks are solved by the anticorrosion, short-anchoring terminal without die part lines for accumulator batteries according to the present invention which, in addition to meeting the requirement of the mechanical fixing or anchoring in the material of the cover, with an amount of lead which is substantially reduced -- by as much as 40% of the total weight -- with respect to known similar terminals has the important advantage that it does not have, in its lower portion, the longitudinal flash or die part lines that facilitate corrosion, ensuring a hermetic seal which prevents outward migration of the electrolyte.

This last feature is possible because of the configuration of the lower portion, which allows to manufacture the terminal by using molds or dies which do not require radial opening in order to extract the finished terminal.

Another highly important aspect to be considered is the fact that the lead alloy used to manufacture the terminal according to the present invention requires no percentage or content of arsenic, which is a highly toxic component, to avoid deformation of the material under the intense pressures at which the molten plastics is injected. This is a consequence of the configuration or structure of the lower portion of the terminal embedded in the cover, which is highly resistant to the deformation applied by said pressures.

In order to fully eliminate corrosion, the lead terminal according to the present invention is preferably manufactured with the conventional cold-forging process, starting from a solid or hollow extruded piece of lead; internal porosity, which facilitates the migration of the electrolyte due to outward capillarity, is thus eliminated.

These results are a direct consequence of the particular configuration and shape of the anticorrosion terminal with short anchoring and without die part lines for accumulator batteries according to the present invention, which comprises an upper portion protruding from the cover or covering element of the battery, is preferably constituted by a frustum-shaped hollow body, a hollow lower portion being provided, near the end of said body which has the largest cross-section, for anchoring in the thermoplastic material, the internal cavity of said body being frustum-shaped. Said lower portion is constituted by two arms, the outer configuration whereof is such that axial movement of the terminal is prevented or locked. The first arm has a cylindrical shape and a larger diameter than the larger-section end of the frustum-shaped body, whilst the second arm is frustum-shaped; means for locking the rotary motion of the terminal are formed near the larger-section end of said body.

In order to embody the advantages thus briefly noted, and in order to facilitate comprehension of the constructive, structural and functional characteristics of the anticorrosion terminal with short anchoring and without die part lines for accumulator batteries according to the present invention, a preferred embodiment is described hereafter and is shown schematically and without any specific scale in the accompanying drawings; it should be expressly noted that indeed because it is an example, it has no limitative or restrictive effect on the scope of the protection of the present invention; the intent is purely to provide a mere explanation and illustration of the basic concept on which the present invention is based.

In the drawings:
figure 1 is a perspective view of the anticorrosion terminal with short anchoring, without die part lines, for accumulator batteries according to the present invention;
figure 2 is a partial longitudinal sectional view of the terminal of figure 1, anchored in the cover of the battery;
figures 3 and 4 are perspective views of the terminal according to the present invention, with different embodiments of the means for locking the rotation of said terminal.

In all the figures, identical reference numerals designate the same or equivalent parts or structural elements of the assembly, according to the exemplifying embodiment chosen for the present description of the anticorrosion terminal with short anchoring and without die part lines for accumulator batteries according to the present invention.

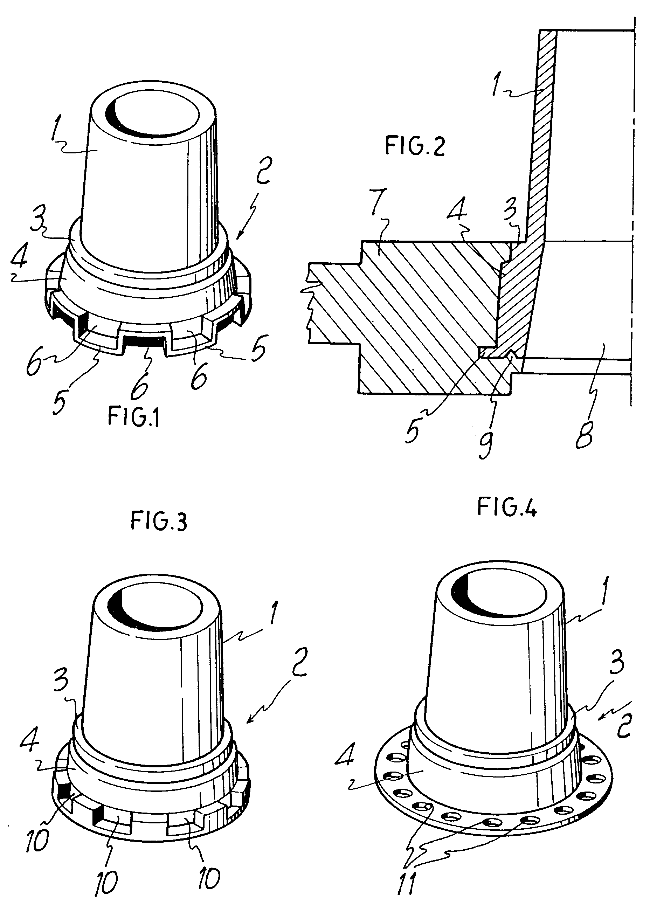

As shown in figure 1, the terminal according to the present invention comprises an upper portion which, in the illustrated example, is constituted by a hollow frustum-shaped body 1 having, near its larger-section end, a hollow lower portion which is generally designated by the reference numeral 2 and is provided for anchoring the terminal in the thermoplastic material. The lower portion 2 is constituted by a first annular element 3 which has a larger diameter than the larger-section end of the frustum-shaped body 1 and continues with a second frustum-shaped element 4.

As illustrated, next to the larger-section end of the element 4 there is provided a circumferential protrusion 5 whose wall forms a plurality of perimetric cavities 6 which are open alternately upward and downward and which accommodate the thermoplastic material during injection, constituting a means for locking the rotation of the terminal.

Figure 2 is a longitudinal sectional view of the same terminal of figure 1, molded in the cover or covering element 7 of the battery. As clearly shown, the lower hollow portion 2 has an internal frustum-shaped cavity 8 which is coaxial to the internal cavity of the frustum-shaped body 1. A circumferential groove 9 formed in the lower face extends the path of any migration of the electrolyte along the contact surface between the lead alloy and the thermoplastic material.

As shown, the lower portion 2 is fully embedded in the thermoplastic material, so as to prevent the axial movement of the terminal, whilst the perimetric cavities 6 block rotation. Likewise, the portion 2 has such a shape that it is highly resistant to the deformation caused by the intense injection-molding pressures and it is consequently possible to use an arsenic-free lead alloy.

Figure 3 illustrates the terminal according to the present invention with rotation locking means formed by a plurality of circumferential grooves 10, whilst figure 4 is a view of the same terminal, in the lower portion 2 whereof there is provided a plurality of openings 11 in which the molten thermoplastic material is deposited or seated.

The scope of the protection of the present invention is defined not only by the embodiments of the above example but also by the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An anticorrosion terminal with short anchoring and without die part lines for accumulator batteries, comprising an upper portion which is preferably shaped like a frustum-shaped hollow body which protrudes from the cover of the battery, characterized in that it comprises, adjacent to the larger-section end of said hollow frustum-shaped body, a hollow lower portion whose internal cavity is coaxial to the cavity of said frustum-shaped body; said hollow lower portion having a first cylindrical element having a larger diameter than the larger-section end of the hollow frustum-shaped body, said first element continuing with a second frustum-shaped element; terminal anchoring means being formed next to the larger-section end of said second element and being constituted by a circumferential protrusion whose wall forms a plurality of anchoring recesses.

2. A terminal according to claim 1, characterized in that said anchoring recesses comprise perimetric cavities which are alternately open upward and downward.

3. A terminal according to claim 1, characterized in that said hollow lower portion has a frustum-shaped internal cavity.

4. A terminal according to claim 1, characterized in that said hollow lower portion has at least one circumferential groove in its shaped lower face.

5. A terminal according to claim 1, characterized in that said anchoring recesses are constituted by a plurality of circumferential grooves or slots.

6. A terminal according to claim 1, characterized in that said anchoring recesses are constituted by a plurality of openings whose centers are arranged along a circumference.
